# EUROPEAN PATENT SPECIFICATION

(11) **EP 4 399 088 B1**
(45) Date of publication and mention of the grant of the patent: **05.11.2025**
(21) Application number: 22773499.3
(22) Date of filing: 06.09.2022
(51) Int. Cl.: B32B 3/04, B29C 45/16, B32B 27/08, B32B 27/30, B32B 38/18, C08L 55/02, B32B 27/32, B32B 37/14, B29B 17/00, B29K 55/02, B29K 105/26

(54) **MULTILAYER ARTICLE COMPRISING A RECYCLED ABS COPOLYMER CORE LAYER**
MEHRSCHICHTIGER ARTIKEL MIT EINER RECYCELTEN ABS-COPOLYMERKERNSCHICHT
ARTICLE MULTICOUCHE COMPRENANT UNE COUCHE CENTRALE DE COPOLYMÈRE ABS RECYCLÉE

(30) Priority: 07.09.2021 EP 21195221; 30.06.2022 EP 22182204
(43) Date of publication of application: 17.07.2024
(73) Proprietor: INEOS Styrolution Group GmbH, 60325 Frankfurt (DE)
(72) Inventor: NIESSNER, Norbert, 67159 Friedelsheim (DE); CLARKE-KNOWLES, Samuel, 60326 Frankfurt am Main (DE); VAN VEEN, Yvonne, 1422PC Uithoorn (NL); FACHTAN, Robin, 95444 Bayreuth (DE); ALTSTÄDT, Volker, 20099 Hamburg (DE); NEUMEYER, Thomas, 95448 Bayreuth (DE); KRAUSE, Katharina, 95517 Seybothenreuth (DE); DIETLEIN, Christian, 97072 Würzburg (DE)
(74) Representative: Jacobi, Markus Alexander
(86) International application number: PCT/EP2022/074694
(87) International publication number: WO 2023/036760

(56) References cited:
- JP-A- 2001 205 670
- XU X F ET AL: "Effects of polybutadiene-g-SAN impact modifiers on the morphology and mechanical behaviors of ABS blends", EUROPEAN POLYMER JOURNAL, PERGAMON PRESS LTD OXFORD, GB, vol. 41, no. 8, 1 August 2005 (2005-08-01), pages 1919 - 1926, XP004991733, ISSN: 0014-3057, DOI: 10.1016/J.EURPOLYMJ.2005.02.025
- ANONYMOUS: "ABS Resins - an overview | ScienceDirect Topics", 2008, pages 1 - 1, XP093007826, Retrieved from the Internet <URL:https://www.sciencedirect.com/topics/chemical-engineering/abs-resins> [retrieved on 20221213]

## Description

The present invention relates to a multilayer article based on ABS copolymer(s) comprising a recycled acrylonitrile-butadiene-styrene copolymer (r-ABS) core layer, a process for its preparation by co-injection and its use, in particular for applications in the household sector.

Creating articles with a polymer B on top of a polymer A are well known for decades. Examples are co-extruded barrier packaging for food, such as polyamide as gas barrier on top of polyethylene-layer, eventually using a compatibilization layer to prevent delamination. The lamination of polymer layers on top of other polymer layers is well known. Vacuum packaging for coffee are e.g. multilayer laminates preventing or reducing diffusion of air into the packaging and hence extending storage time (shelf life).

Injection molding to create multilayer structures of polymers is a common technology. EP-A 0125 787 describes 3-layer or more layer structures of polymers produced by co-injection. The multilayer structures have outer layers A and B, which can be of the same material, preferably of polyolefines, the inner layer C is preferably an ethylene vinyl alcohol copolymer. Furthermore, it is known to use Styroflex^{®}2G66 (INEOS Styrolution, Frankfurt), which is a specific soft S-TPE elastomer, e.g. in soft-hard two-component injection molding applications. They adhere to different hard polymers such as GPPS, SBS, MABS, PC, PMMA, SAN, PETG or PET ("Thermoplastic Styrene/Butadiene Elastomers: from Product Innovation to new Applications", N. Niessner, Thermoplastic Elastomers World Summit, Barcelona, Dec 9-10, 2015). The reference is however silent about over-molding and core/shell layer articles.

All described plastics are virgin plastics, produced starting from petroleum. In recent years, a strong movement to recycle and reuse petrochemical products is observed, such as plastics, in addition to metallic material. Recycling plastic (recycling material) from waste plastic material has a variety of benefits compared to producing virgin plastic from petroleum, e.g. less energy is required, the need for disposing waste material is reduced and the use of limited geological resources, such as petroleum, is reduced. Typically, waste plastic materials include post-consumer and post-industrial waste materials and plastic scrap. Some common polymer types in waste plastic materials from durable goods are acrylonitrile-butadiene-styrene copolymers (ABS), high impact polystyrene (HIPS), polypropylene (PP) and polycarbonate (PC).

Nordson Xaloy describes a twinshot^{®} two-component molding technology for the preparation of three layer structures A-B-A with the core-layer B completely encapsulated wherein as material for the core layer B a recycled resin and as material for the skin a virgin resin is used.

WO 2021/074084 describes ABS molding compositions obtained by extrusion which comprise recycled ABS copolymer (rABS) and a virgin material - a mixture of virgin thermoplastic polymers - selected from ABS copolymers, styrene-acrylonitrile copolymers (SAN), and styrene-butadiene block copolymers (SBC) -, and virgin lubricants. Exemplified are compositions consist of r-ABS (25 wt.-%) and virgin ABS (48 to 53 wt.-%, Novodur^{®} VLK), virgin SAN (13 to 18 wt.-%, Luran^{®} 2560), virgin SBC (0.9 to 10 wt.-%, Styroflex^{®} 2G66) and EBS (0.5 to 5 wt-%). All components are melt compounded by extrusion at a temperature in the range of 180 to 280 °C. Said ABS molding compositions are dark-coloured due to the rABS and often have adverse health effects such as skin irritations due to the migration of additives.

JP 2001 205670 A discloses a multilayer molded article having an outer layer of virgin polymer material and a core layer of recycled polymer material. The multilayer body can be produced by sandwich molding or else multilayer injection molding.

X. F. Xu et al. disclose in "Effects of polybutadiene-g-SAN impact modifiers on the morphology and mechanical behaviors of ABS blends", European Polymer Journal, Per-gamon Press Ltd., Oxford, GB, vol. 41, no. 8, 1 August 2005, pages 1919-1926, ABS blends of PB-g-SAN impact modifiers - obtained by seed emulsion polymerization - and a SAN-resin (AN 25 wt.-%). The study investigates the effect of the different impact modifiers on the mechanical behavior and morphology of the ABS blends.

E. Alfredo Campo discloses in "Selection of Polymeric Materials", In Plastics Design Library, William Andrew Publishing, 2008, Chapter 1: "Polymeric Materials and Properties", Pages 1-39, Section 1.14.1 "Acrylonitrile-Butadiene-Styrene (ABS) Terpolymer" that ABS resins are two-phase systems in which SAN forms a continuous matrix phase and the second phase is a dispersed phase with SAN-grafted polybutadiene particles.

It is an object of the invention to provide an ABS plastic material comprising recycled ABS copolymers that can be used for certain high quality applications, e.g. for use in household devices which have to meet the General Food Law Regulations as an alternative to the corresponding virgin polymer products. Moreover, the provided ABS plastic material shall have good mechanical properties (e.g. impact strength, peel strength).

It was surprisingly found that the object is achieved by a multilayer article based on styrenic polymers according to the claims.

One aspect of the invention is a multilayer article comprising (or consisting of)
a) a core layer a) consisting of a recycled plastic material comprising at least one recycled nitrile-diene-vinylaromatic graft copolymer; and
b) a layer b) consisting of a virgin plastic material comprising at least one virgin nitrile-diene-vinylaromatic graft copolymer;
wherein
the portion of the core layer a) - related to the entire multilayer article - is 20 to 50 wt.-%, preferably 25 to 45 wt.-%, more preferably 30 to 45 wt.-%, most preferably 35 to 40 wt.-%, and
the core layer a) is encapsulated by layer b);
the virgin plastic material of layer b) comprises 5 to 70 wt.-%, preferably 10 to 60 wt.-%, of the at least one virgin nitrile-diene-vinylaromatic graft copolymer, preferably virgin acrylonitrile-butadiene-styrene graft copolymer, and 30 to 95 wt.-%, preferably 40 to 90 wt.-%, of at least one virgin non-rubber modified copolymer selected from styrene/(meth)acrylonitrile copolymers and alpha-methylstyrene/(meth)acrylonitrile copolymers;
the virgin plastic material forms a discontinuous phase comprising dispersed, spherical virgin nitrile-diene-vinylaromatic graft copolymer particles in a matrix of at least one virgin non-rubber modified copolymer selected from styrene/(meth)acrylonitrile copolymers and alpha-methylstyrene/(meth)acrylonitrile copolymers, preferably at least one styrene/acrylonitrile (SAN) copolymer and/or alpha-methylstyrene/acrylonitrile (AMSAN) copolymer, wherein the virgin nitrile-diene-vinylaromatic graft copolymer particles are obtained by emulsion polymerization and built up from a graft base polymer based on at least one conjugated diene, and a graft shell, grafted onto the graft base and built up based on at least one vinylaromatic monomer and acrylonitrile and/or methacrylonitrile; the virgin nitrile-diene-vinylaromatic graft copolymer particles obtained by emulsion polymerization have a mean weight particle size (D50) - determined via OsO₄ or RuO₂ stained electron photomicrographs according to the description - of from 90 to 400 nm; and
the diene is a conjugated diene, in particular butadiene.

In terms of the present invention "virgin plastic material" means a material, which is made from geological resources, and is not made from existing and in particular used material.

In the present invention "virgin (co)polymer" means a (co)polymer, which is made from geological resources, such as petroleum, and is not made from existing and in particular used plastic material. In the present invention "recycled plastic material" means a material that is prepared from waste plastic material, in particular from recycled durable goods, typically in a recycling and separation process.

In terms of the present invention "recycled nitrile-diene-vinylaromatic graft copolymer" means a graft copolymer from type nitrile-diene-vinylaromatic, in particular acrylonitrile-butadiene-styrene graft copolymer, that is prepared from waste plastic material, in particular from recycled durable goods, typically in a recycling and separation process.

In terms of the present invention "recycled non-rubber modified vinylaromatic-nitrile-copolymer" means a non-rubber modified copolymer from type vinylaromatic-nitrile-copolymer, in particular styrene-acrylonitrile copolymer (SAN), that is prepared from waste plastic material, in particular from recycled durable goods, typically in a recycling and separation process.

In the present invention "durable goods" or "recycled durable goods" means goods, such as household appliance, machinery, sport equipment, consumer electronics, and automobiles, that are not consumed or destroyed quickly in use, but are expected to last and yields utility a long time, in particular three or more years. In particular the term "post-consumer products" or "post-consumer durable goods" refer to products or goods after their intended use, in particular after their use for three or more years, e.g. such material is collected and recycled in form of waste plastic material.

In the present invention "encapsulated" means the core layer a) is (nearly totally) covered by layer b). As an example, the core layer a) is covered by more than 99% by layer b).

The multilayer article according to the invention is a shaped article which may comprise 2 or more layers, preferably 2 to 7 layers (e.g. layers a), b), c), d), e), f) and g)), more preferably 2 to 4 layers, 2 layers are preferred. Optional layers c), d), e), f) and g) may be arranged over layer b).

Said optional layers c), d), e), f) and g) generally comprise (co)polymers based on styrenic polymers, where at least the outermost layer, preferably all of said optional layers, comprise(s) a virgin (co)polymer.

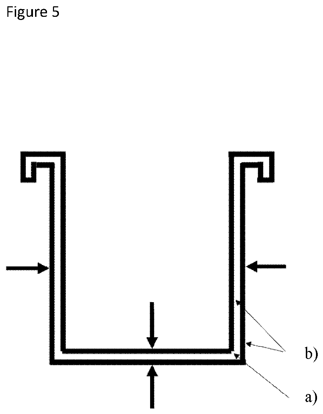

Preferably the multilayer article is a two-layer article and consists of layers a) and b) (cf. Figure 5). In this case layer b) is an outer layer, a so-called skin-layer.

### Recycled Plastic Material

The recycled plastic material is a recycled nitrile-diene-vinylaromatic plastic material, in particular a recycled acrylonitrile-butadiene-styrene (rABS) plastic material, preferably comprising at least 90 % by weight of recycled nitrile-diene-vinylaromatic copolymer type polymers, in particular recycled acrylonitrile-butadiene-styrene copolymer type polymers.

Said recycled plastic material may be a recycled blend comprising at least one recycled nitrile-diene-vinylaromatic graft copolymer, in particular recycled acrylonitrile-butadiene-styrene graft copolymer, and at least one recycled non-rubber modified vinylaromatic nitrile copolymer, in particular recycled styrene acrylonitrile (SAN) copolymer.

Furthermore, the recycled plastic material may for example be a mixture of different grades of recycled nitrile-diene-vinylaromatic graft copolymers, in particular acrylonitrile-butadiene-styrene graft copolymers, or a mixture of different grades of a recycled blend comprising at least one recycled nitrile-diene-vinylaromatic graft copolymer, in particular, recycled acrylonitrile-butadiene-styrene graft copolymer, and at least one recycled non-rubber modified vinylaromatic nitrile copolymer, in particular recycled styrene acrylonitrile (SAN) copolymer.

Preferably the recycled plastic material is a recycled acrylonitrile-butadiene-styrene (rABS) plastic material composed of one grade of at least one, preferably one, recycled acrylonitrile-butadiene-styrene graft copolymer or one grade of a recycled blend comprising at least one, preferably one, recycled acrylonitrile-butadiene-styrene graft copolymer and at least one, preferably one, recycled non-rubber modified styrene acrylonitrile (SAN) copolymer.

For example the recycled ABS plastic material can be obtained from scrap and rejected parts from a manufacturing process of ABS-moldings.

Typically, a grade of a polymer is a formulation of the polymer of the given polymer type with a particular set of defined physical characteristics or properties (property profile). Different grades of polymer materials may differ in molecular weight, molecular weight distribution, polymer structure, and additives. Different grades of a given polymer type are generally compatible and can be melt mixed to create a new material with a different property profile. Generally, different types of polymers cannot mixed in molten form unless they are compatible types.

In a preferred embodiment the recycled plastic material, in particular recycled acrylonitrile-butadiene-styrene (rABS) plastic material, exhibits one or more (e.g. two, three or more) of the following properties:
- Melt volume flow rate (MVR) (measured on a polymer melt at 220°C and 10 kg load according to ISO 1133-1:2011) in the range of 10 to 35 cm³/10 min, preferably 25 to 35 cm³/10 min,
- Vicat temperature (Vicat B/50 measured according to ISO 306:2004) of more than or equal to 80 °C, preferably in the range of 80 to 100 °C,
- E-modulus (measured in accordance with ISO 527) of more than 1500 MPa, preferably more than 2000 MPa;
- Stress at yield (measured with ISO 527) in the range of 30 to 50 MPa,
- Elongation at break (measured in accordance with ISO 527) at least 2%, preferably in the range of 2 to 50 %, more preferably 2 to 15 %,
- Charpy Notched Impact Strength at 23 °C (measured in accordance with DIN EN-ISO 179-1: 2010) notch type A) in the range of 2 to 20, preferably 10 to 15 kJ/m²,
- Izod Impact Strength (measured in accordance with DIN EN-ISO 180:2000 +A1: 2006) of more than 10.

The recycled plastic material may comprise commonly known additives and/or processing aids (e.g. organic and/or inorganic substances) or by-products.

### Virgin plastic material

The virgin plastic material used for layer b) is a virgin nitrile-diene-vinylaromatic plastic material, in particular a virgin acrylonitrile-butadiene-styrene (ABS) plastic material, comprising at least one virgin nitrile-diene-vinylaromatic graft copolymer, preferably at least one virgin acrylonitrile-butadiene-styrene graft copolymer.

The virgin plastic material used for layer b) comprises at least one virgin nitrile-diene-vinylaromatic graft copolymer, in particular at least one virgin acrylonitrile-butadiene-styrene graft copolymer, and at least one virgin non-rubber modified copolymer selected from styrene/(meth)acrylonitrile copolymers and alpha-methylstyrene/(meth)acrylonitrile copolymers, preferably styrene/acrylonitrile (SAN) copolymers and alpha-methylstyrene/acrylonitrile (AMSAN) copolymers, more preferably styrene/acrylonitrile (SAN) copolymers.

Suitable virgin non-rubber modified copolymers may comprise (or consist of):
from 50 to 95% by weight, preferably from 65 to 80% by weight, particularly preferably from 69 to 80% by weight, also preferably from 71 to 80% by weight of at least one monomer selected from styrene, α-methylstyrene and mixtures of styrene and α-methylstyrene, and from 5 to 50% by weight, preferably from 20 to 35% by weight, particularly preferably from 20 to 31% by weight, also preferably from 20 to 29% by weight of a monomer selected from acrylonitrile and mixtures of acrylonitrile and methacrylonitrile.

Preferred as virgin non-rubber modified copolymers are SAN-copolymers in the afore-mentioned amounts.

Typically, the average molar mass M_{W} of suitable virgin non-rubber modified copolymers, preferably SAN-copolymers, is from 80 000 to 350 000 g/mol, preferably from 100 000 to 300 000 g/mol and particularly preferably from 120 000 to 250 000 g/mol.

The virgin plastic material comprises:
5 to 70 wt.-%, preferably 10 to 60 wt.-%, of at least one virgin nitrile-diene-vinylaromatic graft copolymer, in particular at least one virgin acrylonitrile-butadiene-styrene graft copolymer, and
30 to 95 wt.-%, preferably 40 to 90 wt.-%, of at least one virgin non-rubber modified copolymer selected from styrene/(meth)acrylonitrile copolymers and alpha-methylstyrene/(meth)acrylonitrile copolymers, preferably at least one styrene/acrylonitrile (SAN) copolymer and/or alpha-methylstyrene/acrylonitrile (AMSAN) copolymer.

In particular, the virgin plastic material comprises:
5 to 70 wt.-%, preferably 10 to 60 wt.-%, of at least one virgin acrylonitrile-butadiene-styrene graft copolymer, and
30 to 95 wt.-%, preferably 40 to 90 wt.-%, of at least one styrene/acrylonitrile (SAN) copolymer.

Suitable virgin ABS plastic materials are commercially available products such as for example Terluran^{®} or Novodur^{®} from INEOS Styrolution, Frankfurt, Germany.

The virgin plastic material forms a discontinuous phase (or morphology) comprising dispersed, spherical virgin nitrile-diene-vinylaromatic graft copolymer particles, in particular virgin acrylonitrile-butadiene-styrene graft copolymer particles, in a matrix of at least one virgin non-rubber modified copolymer selected from styrene/(meth)acrylonitrile copolymers and alpha-methylstyrene/(meth)acrylonitrile copolymers, preferably at least one styrene/acrylonitrile (SAN) copolymer and/or alpha-methylstyrene/acrylonitrile (AMSAN) copolymer.

More preferably the virgin plastic material forms a discontinuous phase (or morphology) comprising dispersed, spherical virgin acrylonitrile-butadiene-styrene graft copolymer particles in a matrix of at least one virgin styrene/acrylonitrile (SAN) copolymer. Afore-mentioned virgin plastic materials having such a discontinuous morphology effectively prevent the migration of impurities or other undesirable ingredients such as organic and/or inorganic substances or by-products which may be comprised in the recycled plastic material of layer a) through the virgin plastic material of layer b).

The virgin nitrile-diene-vinylaromatic graft copolymer particles, in particular virgin acrylonitrile-butadiene-styrene graft copolymer particles, generally have a mean weight particle size (D50) of from 90 to 400 nm.

In the context of the present invention the mean weight particle size was determined via OsO₄ or RuO₂ stained electron photomicrographs and a mathematical algorithm correcting for microtoming particles in random sections between the poles and the equator of a particle.

The virgin nitrile-diene-vinylaromatic graft copolymer particles, in particular virgin acrylonitrile-butadiene-styrene graft copolymer particles, are obtained by emulsion polymerization and built up from a graft base polymer based on at least one conjugated diene, in particular 1,3-butadiene, and a graft shell, grafted onto the graft base and built up based on at least one vinylaromatic monomer, in particular styrene, and acrylonitrile and/or methacrylonitrile, preferably acrylonitrile.

Preferred diene rubbers (graft bases) and nitrile-diene-vinylaromatic graft copolymers are described in EP-B 0993476, in WO 01/62848 and in WO 2012/022710 (in particular pages 23-28). The term "diene" means a conjugated diene, in particular butadiene.

Preferred are virgin nitrile-diene-vinylaromatic graft copolymers obtained by emulsion polymerization and built up from:
30 to 90% by weight, based on the graft copolymer, of at least one graft base made from 70 to 98% by weight, based on the graft base, of at least one diene, in particular 1,3-butadiene, and
   2 to 30% by weight, based on the graft base, of at least one monomer selected from the group consisting of: styrene, α-methylstyrene, acrylonitrile, methacrylonitrile and methyl methacrylate, in particular styrene; and
10 to 70% by weight, based on the graft copolymer, of a graft, grafted onto the graft base and built up from
   65 to 95% by weight, based on the graft, of at least one vinylaromatic monomer, in particular styrene,
   5 to 35% by weight, based on based on the graft, acrylonitrile and/or methacrylonitrile, preferably acrylonitrile, and
   0 to 20% by weight, based on (a₂), of at least one monomer selected from the group consisting of: C₁-C₄-alkyl(meth)acrylates, maleic anhydride, N-phenyl maleimide, N-cyclohexyl maleimide and (meth)acrylamide.

Processes for the preparation of said virgin nitrile-diene-vinylaromatic graft copolymers are known to a person skilled in the art and described in the literature. Preferably the graft base and said virgin nitrile-diene-vinylaromatic graft copolymers are obtained from free-radical emulsion polymerization (EP 993476, WO 01/62848 and WO 2012/022710).

The virgin nitrile-diene-vinylaromatic graft copolymer particles, in particular acrylonitrile-butadiene-styrene graft copolymer particles, obtained by emulsion polymerization have a mean weight particle size (D50) of from 90 to 400 nm.

According to a further embodiment virgin nitrile-diene-vinylaromatic graft copolymer particles, in particular virgin acrylonitrile-butadiene-styrene graft copolymer particles, may be obtained by mass (bulk) or solution polymerization in a continuous process in the presence of a dissolved non-cross-linked rubber polymer based on at least one conjugated diene, preferably 1,3-butadiene.

In said mass (bulk) or solution polymerization process a virgin rubber modified vinylaromatic composition (virgin plastic material) is obtained which is composed of a matrix phase comprising a copolymer of at least one vinylaromatic monomer, in particular styrene, and acrylonitrile and/or methacrylonitrile, preferably acrylonitrile, and a dispersed phase comprising particles of at least one nitrile-diene-vinylaromatic graft copolymer, preferably acrylonitrile-butadiene-styrene graft copolymer, composed of the rubber polymer based on at least one conjugated diene with grafts built up from (parts or portions) the at least one vinylaromatic monomer and acrylonitrile and/or methacrylonitrile.

Preferably in said mass (bulk) or solution polymerization process a virgin rubber modified vinylaromatic composition is obtained which is composed of a matrix phase comprising a copolymer of styrene and acrylonitrile, and a dispersed phase comprising particles of a virgin (mass-) acrylonitrile-butadiene-styrene graft copolymer composed of a rubber polymer based on 1,3-butadiene with grafts built up from (parts or portions) styrene and acrylonitrile.

More preferably the afore-mentioned virgin rubber modified vinylaromatic copolymer composition is obtained by mass (bulk) or solution polymerization of monomers B1) and B2)
50 to 85 wt.-%, based on B1), B2) and C), of at least one vinylaromatic monomer B1), preferably styrene and/or alpha-methylstyrene, more preferably styrene;
10 to 40 wt.-% - based on B1), B2) and C) - (meth)acrylonitrile B2), preferably acrylonitrile;
in a continuous process in the presence of C:
   5 to 20 wt.-%, preferably 11 to 18 wt.-%, - based on B1), B2) and C) - of a rubber polymer C) made from:
   30 to 100 wt.-%, preferably 70 to 100 wt.-% - based on C) - of a conjugated diene C1), preferably 1,3-butadiene;
   0 to 70 wt.-%, preferably 0 to 30 wt.-%, - based on C) - of at least one comonomer C2), preferably styrene;
where the sum of components B1), B2) and C) is 100 wt.-%.

According to a specific embodiment the virgin plastic material comprises (or consists of) the afore-mentioned virgin rubber modified vinylaromatic composition comprising particles of at least one virgin (mass-) nitrile-diene-vinylaromatic graft copolymer, in particular at least one virgin (mass-) acrylonitrile-butadiene-styrene graft copolymer.

Often the mean weight particle size (D50) of the virgin (mass-) nitrile-diene-vinylaromatic graft copolymer, in particular virgin (mass-) acrylonitrile-butadiene-styrene graft copolymer, comprised in this composition is more than 0.3 µm.

Such a virgin mass-plastic material is commercially available as e.g. Magnum^{®} 3904 from Trinseo.

The virgin plastic material may further comprise up to 20 parts by weight (pbw), preferably up to 10 pbw - based on 100 pbw virgin plastic material - of at least one additive and/or processing aid. Preferably, the virgin plastic material may comprise from 0.01 to 10 pbw, preferably 0.1 to 5 pbw, more preferably 0.1 to 2.5 pbw, based on the virgin plastic material, of one or more additive and/or processing aid. According to the invention the amount of flame retardants, in particular halogenated flame retardants and/or inorganic flame retardants (e.g. Sb₂O₃ or Sb₂O₅ - used as synergists in combination with halogenated flame retardants), comprised in the virgin plastic material is less than 0.01 pbw.

Said additives and/or processing aids are typically selected from commonly known additives for styrenic polymers. Substances that can be used as additives or auxiliaries are the polymer additives known to the person skilled in the art and described in the prior art (e.g. Plastics Additives Handbook, ed. Schiller et al., 6th Ed, 2009, Hanser).

The additive and/or auxiliary can be added to the virgin nitrile-diene-vinylaromatic graft copolymer as such, or, in case the virgin material comprises further components, in particular a virgin non-rubber modified copolymer, prior to or during the compounding procedure (melt-mixing, often by extrusion, at a temperature in the range of 180 to 280°C) of the components comprised in the virgin material (e.g. mixing of the virgin nitrile-diene-vinylaromatic graft copolymer and virgin non-rubber modified copolymer in the melt).

### Process for the preparation of the multilayer article

A further aspect of the invention is a process for the preparation of a multilayer article, preferably two-layer, article, according to the invention by co-injection molding comprising the steps of:
(i) providing a molten virgin plastic material for layer (b);
(ii) via a first hot runner system, feeding and complete injection of the molten virgin plastic material for layer (b) into the mold cavity of an injection molding machine to obtain layer (b), preferably skin layer (b);
(iii) providing a molten recycled plastic material for core layer (a);
(iv) immediately after completion of step (ii), via a second hot runner system, feeding and complete injection of the molten recycled plastic material for core layer (a) into the still molten virgin plastic material of layer (b) already in the mold cavity of the injection molding machine to obtain the multilayer article, preferably two-layer article.

Advantageously the recycled plastic material used for the core layer (a) has a slightly higher viscosity than the virgin plastic material used for the (skin) layer (b) so that a multi-layer article having the desired layer structure where core layer (a) is encapsulated is obtained.

Alternatively, in case the viscosities of the recycled plastic material used for the core layer (a) and of the virgin plastic material used for the (skin) layer (b) are too similar, the viscosity ratio may be controlled via different temperatures in the first and second hot runner system used for the molten material. In this case, preferably the temperature in the first hot runner system is at least 10°C, preferably 20°C, more preferably 30°C, higher than the temperature in the second hot runner system.

Often, in step (ii), in the first hot runner system a temperature in the range of 200 to 280°C is used for the molten virgin plastic material, and, in step (iv) in the second hot runner system a temperature in the range of 180 to 240°C is used for the molten recycled plastic material, where the temperature in the first hot runner system is at least 10°C, preferably 20°C, more preferably 30°C, higher than the temperature in the second hot runner system.

According to one embodiment, in step (ii), in the first hot runner system a temperature in the range of 230 to 250°C, is used for the molten virgin plastic material, and, in step (iv) in the second hot runner system a temperature in the range of 200 to 220°C, is used for the molten recycled plastic material.

The multilayer article according to the invention has good mechanical properties (e.g. impact strength) and is characterized by a good delamination force ("peel strength") necessary to remove layer b) from core layer a) which is equal to or higher than 10 N/mm² (according to ISO 527-1:2019).

Due to the encapsulated core layer (a) consisting of the recycled plastic material of the multi-layer article according to the invention adverse health effects such as skin irritations due to the migration of additives can be prevented. This effect to prevent the migration of impurities or other undesirable ingredients or by-products - which may be comprised in the recycled plastic material of layer (a) - through the virgin plastic material of layer b) may be further improved by use of virgin plastic material for layer (b) which forms a discontinuous phase (or morphology) comprising dispersed, spherical virgin nitrile-diene-vinylaromatic graft copolymer particles in a matrix of at least one virgin non-rubber modified copolymer selected from styrene/(meth)acrylonitrile copolymers and alpha-methylstyrene/(meth)acrylonitrile copolymers.

Compared to molding compositions comprising recycled plastic materials the obtained multi-layer articles according to the invention have the advantage to be light-colored products even though they comprise a recycled plastic material which usually is dark-colored (often dark grey).

The multilayer articles according to the invention can have a very complex structure, in especially a 3-dimensional structure. For example the multilayer article may have the shape of a box, a housing, a cover or the like. One embodiment of a multilayer article having a complex, i.e. 3-dimensional, structure is shown in Figure 5. Said multilayer articles with complex structures are not limited to the embodiment shown in Figure 5.

For example the multilayer article may have corners of a different shape which may be round, angular, rectangular etc. Furthermore, the multilayer article may have gates and/or sprues.

The multilayer article according to the invention shows no visual phase inversion between core and outer layers. Generally the core layer a) and the (skin) layer b) of the multilayer article show a microphase separation in domains not larger than 5 µm, preferably not larger than 2 µm, when co-injected at temperatures of at least 200 °C and above.

A further aspect of the present invention is the use of the multi-layer article, preferably two-layer article, for various applications, in particular for applications in the household sector which have to meet the General Food Law Regulations.

Preference is given to the use of the multi-layer article, preferably two-layer article, for housing parts of household devices, which have to meet the General Food Law Regulations such as juice presses, coffee machines and mixers.

The present invention is illustrated by the following examples, Figures and claims.

### Examples

The following materials were used in the examples:
Recyled plastic material: r-ABS copolymer (ABS R200260 RAL7015) obtained from Bage Plastics. The r-ABS product specifications are shown in Table 1.

**Table 1**

| Properties | Norm and parameter | Value | Unit |
|---|---|---|---|
| Melt flow index, MFI | DIN EN ISO 1133-1 (220°C / 10 kg) | 25 - 35 | g/10 min |
| Density | DIN EN ISO 1183-1 (23°C) | 1.08 - 1.10 | g/cm³ |
| Vicat softening temperature | DIN EN ISO 306 (Methode B / 50°C/h / 50N) | > 90 | °C |
| E-Modulus | | > 2200 | MPa |
| Yield stress | DIN EN ISO 527 | > 40 | MPa |
| Elongation at break | (23° C) | > 2,3 | % |
| Charpy notched | DIN EN ISO 179 (23°C) | 10 - 15 | kJ/m² |
| Izod | DIN EN ISO 180/1A | > 10 | kJ/m² |
| Humidity | DIN EN ISO 15512 | ≤ 0,3 | % |

Virgin plastic material: ABS product Novodur^{®} P2H-AT (ABS graft copolymer blended with a SAN copolymer) from INEOS Styrolution, Germany.

### Preparation of two-layer articles

An Engel DUO/1350H/1350M/450 COMBI M 3-component injection molding system with indexable platen function was used to produce the articles. The virgin plastic material used for the skin layer (outer layer) was injected with unit 1. The recycled ABS copolymer used for core layer was injected with unit 2, which is located in L position on the opposite operating side of the system. The process parameters for unit 1 and 2 used for the preparation of articles composed of 60% skin layer and 40% core layer are shown in Table 2.

**Table 2**

| Aggregate 1 (skin component) | |
|---|---|
| Screw diameter | 60 mm |
| Metering volume | 300 cm³ |
| Injection speed | 175 cm³/s |
| Holding pressure | 100 bar |
| Holding pressure time | 0.2 s |
| Changeover point | 15 cm³ |
| Back pressure | 80 bar |
| Cylinder temperature profile | 240 / 240 /235 / 230 / 220 / 210 °C |
| Hot runner temperature | 240 °C |
| Mold temperature | 45 °C |

| Aggregate 2 (core component) | |
|---|---|
| Screw diameter | 45 mm |
| Metering volume | 240 cm³ |
| Injection speed | 35 cm³/s |
| Holding pressure | 250 bar |
| Holding pressure time | 3s |
| Changeover point | 60 cm³ |
| Back pressure | 80 bar |
| Cylinder temperature profile | 210 / 210 / 205 / 200 / 190 / 180 °C |
| Hot runner temperature | 210 °C |

An intermediate platen equipped with two separately controllable hot runner systems is used to guide the two plastic melts. This is mounted on the clamping platen of the injection molding machine. The injection mold with central injection point is then mounted on the intermediate platen.

Both units inject into the intermediate platen and the melt is fed into the mold via the hot runner systems. In the process used, the skin component was first completely injected. Immediately after completion of the first injection process (duration here: 2.8 s), the core component of unit 2 is injected via the second hot runner system. The core component is thus injected into the still molten skin component already in the mold, and the article is fully formed by the second injection process.

### Charpy impact strength testing

Testing Standard: DIN EN ISO 179
Test mode 'eU': DIN EN ISO 179 -1eU
Test mode 'fU': DIN EN ISO 179 -1fU
Temperature: 20 °C
Pendulum: 50 J
Specimen conditioned at least 16 h at 20°C.

For both test modes 'e' and 'f' the sample thickness is 4 mm.

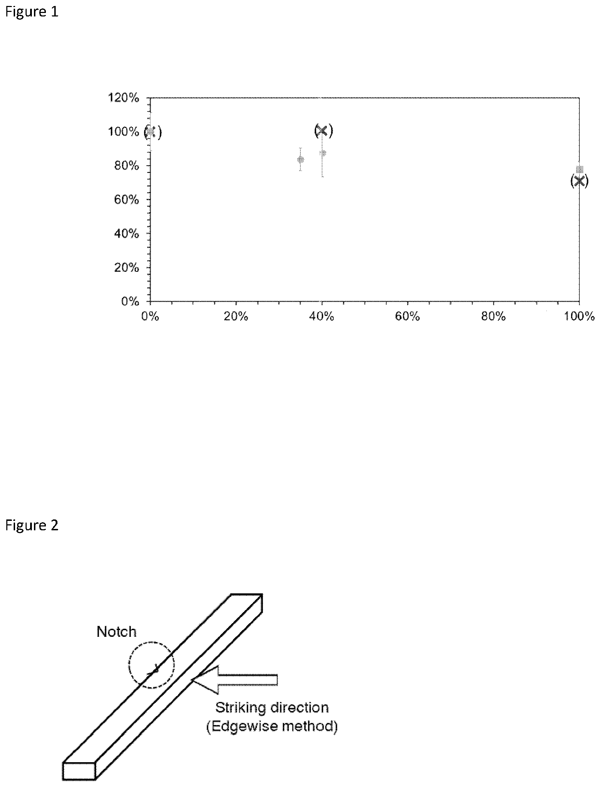

The Charpy test 'mode f' according to DIN EN ISO 179-1fU (punch on broad specimen side, unnotched, only single measurements) represents the real applications:
A two-layer article - comprising a core and skin layer of the materials mentioned above - obtained by the afore-mentioned co-injection molding process shows full retention of Charpy impact strength (cp. Fig. 1) despite having 40 wt.-% rABS as core layer.

Figure 1 shows the Charpy impact strength for modes 'e' (eU, edgewise, unnotched) and 'f' (fU, punch on broad specimen side, unnotched) measured for different samples: The x-axis shows the amount of the recycled plastic material used for the core layer in weight per cent. The y-axis shows the impact strength normalized to the impact strength of virgin material (aₖ/ a_{k_}virgin) in weight per cent.

The crosses show values obtained for samples with test mode 'f' (fU).

The points show values obtained for samples with test mode 'e' (eU).

Figure 2 shows a sample where test mode 'e' (DIN EN ISO 179 -1eU or optional DIN EN ISO 179 -1eA)), is used. The arrow shows the striking direction (edgewise method).The notch (optional (= test mode eA)) is circled.

Figure 3 shows a sample where test mode 'f' is used. The arrow shows the striking direction (punch on broad side).

Figure 4 shows a further sample.

Figure 5 shows a multilayer article (i.e. a box) according to the invention with a 3-dimensional geometry which has been obtained by core/skin layer-co-injection molding. The bold printed arrows point to possible positions for a gate/sprue. The thin-faced arrow a) points to the core layer a); the thin-faced arrows b) point to the skin layer b).

Further mechanical properties of other samples obtained as hereinbefore described have been measured (see Table 3) and evaluated.

Example 1 is a co-injected multilayer article composed of 60 wt.-% of a skin layer b) (Novodur P2H-AT) and 40 wt.-% of a core layer a) (r-ABS).

Example 2 is a co-injected multilayer article composed of 65 wt.-% of a skin layer b) (Novodur P2H-AT) and 35 wt.-% of a core layer a) (r-ABS).

Comparative example 1 is an injection-molded article molded in a one-step injection molding process (conventional injection molding process) made from 100 wt.-% Novodur P2H-AT. For the production of comparative example 1 the same intermediate platen with the hot-runner system was used which was used in the co-injection trials to have a comparable influence concerning residence time and temperature related influences. Moreover, the same molding parameters, the same injection mold tool and the same preparation method was used as in the co-injection trials.

**Table 3**

| | Comparative example 1 | Example 1 | Example 2 |
|---|---|---|---|
| Flexural-Modulus (MPa) (DIN EN ISO 178) | 2120 | 2168 | 2201 |
| Flexural strength σM (MPa) (DIN EN ISO 178) | 61 | 62 | 63 |
| Impact Strength DIN EN ISO 179 -1fU* (kJ/m²) | 56 | 46 | 59 |

| | | | |
|---|---|---|---|
| *average value of at least 5 measurements of a sample | | | |

The obtained data show that the samples according to the invention (Examples 1 and 2) have excellent mechanical properties. The flexular modulus is higher than the sample of comparative example 1 (100 wt.-% Novodur P2H-AT) despite having 40 wt.-% rABS as core layer. Moreover, the flexural strength is as high or even slightly better than the flexural strength of comparative example 1.

Furthermore, the samples of Examples 1 and 2 have an impact strength of 46 kJ/m² and 59 kJ/m², respectively, which shows that the obtained articles have a good ductility. It should be mentioned that according to the invention an article is defined as being ductile if the impact strength is at least 30 kJ/m², preferably at least 40 kJ/m², whereas articles having an impact impact strength of lower than 30 kJ/m² are defined as brittle.

### Delamination testing

In stress/strain tests according to ISO 527-1:2019 the peel strength of tensile bars was determined and the delamination force was further rated by a panel of experts:
Grade 1 "excellent": no delamination possible
Grade 2 "very good": delamination possible, but requires high physical force
Grade 3 "good": delamination possible, requiring medium physical force
Grade 4 "poor": delamination possible with low physical force.

Tensile bars of the obtained 2-layer article according to the invention as described hereinbefore have peel strength of equal to or higher than 10 N/mm². This correlates with a "good" rating of the delamination by experts.

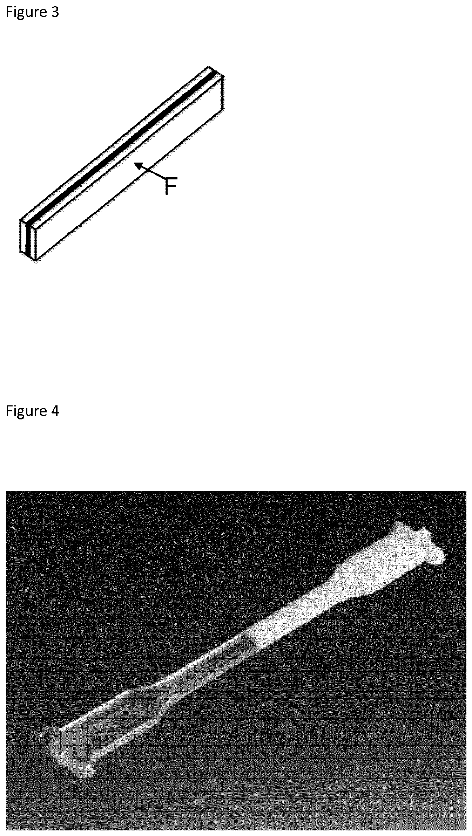

In comparison different prior art polymers (cp. "Thermoplastic Styrene/Butadiene Elastomers: from Product Innovation to new Applications", N. Niessner, Thermoplastic Elastomers World Summit, Barcelona, Dec 9-10, 2015, pages 27/28) were tested (cp. Table 4) which were obtained in a 2-component injection molding process, yielding an ISO 527 tensile bar with an interface between 2 polymers in the middle (cp. figure 4).

**Table 4**

| Polymer A | | Polymer B | Physical delamination impression by experts | Peel strength [N/mm²] |
|---|---|---|---|---|
| PS 156 F | (GPPS) | Styroflex^{®} 2G66 | excellent | No break |
| Styrolux^{®} | (SBS) | Styroflex^{®} 2G66 | excellent | No break |
| Terlux^{®} | (MABS) | Styroflex^{®} 2G66 | Very good | 17.7 |
| PC | | Styroflex^{®} 2G66 | Very good | 17.4 |
| PMMA | | Styroflex^{®} 2G66 | Very good | 16.4 |
| Luran ^{®} KR 2636 | (SAN) | Styroflex^{®} 2G66 | good | 10.8 |
| PETG | | Styroflex^{®} 2G66 | Good | 10.5 |
| PET | | Styroflex^{®} 2G66 | Poor-good | 9.1 |
| PS 156 F | (GPPS) | Styroflex^{®} 2G66 (Shore A 30) | excellent | No break |
| Styrolux^{®} | (SBS) | Styroflex^{®} 2G66 (Shore A 30) | excellent | No break |

The multilayer article according to the invention comprising 40% of recycled plastic material has delamination properties which are at least as good as the prior art products made from virgin plastic materials.

Energy and resources can be spared. The articles are easily to be prepared, cost-efficient and are advantageously used for e.g. food packaging.

## Claims

1. A multilayer article comprising:
a) a core layer a) consisting of a recycled plastic material comprising at least one recycled nitrile-diene-vinylaromatic graft copolymer, preferably recycled acrylonitrile-butadiene-styrene graft copolymer; and
b) a layer b) consisting of a virgin plastic material comprising at least one virgin nitrile-diene-vinylaromatic graft copolymer, preferably virgin acrylonitrile-butadiene-styrene graft copolymer;
wherein
• the portion of the core layer a) - related to the entire multilayer article - is 20 to 50 wt.-%, preferably 25 to 45 wt.-%, and
• the core layer a) is encapsulated by layer b);
• the virgin plastic material of layer b) comprises 5 to 70 wt.-%, preferably 10 to 60 wt.-%, of the at least one virgin nitrile-diene-vinylaromatic graft copolymer, preferably virgin acrylonitrile-butadiene-styrene graft copolymer, and 30 to 95 wt.-%, preferably 40 to 90 wt.-%, of at least one virgin non-rubber modified copolymer selected from styrene/(meth)acrylonitrile copolymers and alpha-methylstyrene/(meth)acrylonitrile copolymers;
• the virgin plastic material forms a discontinuous phase comprising dispersed, spherical virgin nitrile-diene-vinylaromatic graft copolymer particles in a matrix of at least one virgin non-rubber modified copolymer selected from styrene/(meth)acrylonitrile copolymers and alpha-methylstyrene/(meth)acrylonitrile copolymers, preferably at least one styrene/acrylonitrile (SAN) copolymer and/or alpha-methylstyrene/acrylonitrile (AMSAN) copolymer, wherein the virgin nitrile-diene-vinylaromatic graft copolymer particles are obtained by emulsion polymerization and built up from a graft base polymer based on at least one conjugated diene, and a graft shell, grafted onto the graft base and built up based on at least one vinylaromatic monomer and acrylonitrile and/or methacrylonitrile;
• the virgin nitrile-diene-vinylaromatic graft copolymer particles obtained by emulsion polymerization have a mean weight particle size (D50) - determined via OsO₄ or RuO₂ stained electron photomicrographs according to the description - of from 90 to 400 nm; and
• the diene is a conjugated diene, in particular butadiene.

2. The multilayer article according to claim 1 consisting of layers a) and b).

3. The multilayer article according to claim 1 or 2 wherein the portion of the core layer a) - related to the entire multilayer article - is 30 to 45 wt.-%, preferably 35 to 40 wt.-%.

4. The multilayer article according to any of claims 1 to 3 wherein the virgin plastic material further comprises 0.01 to 20 parts by weight (pbw), preferably 0.1 to 10 pbw - based on 100 pbw virgin plastic material - of at least one additive and/or processing aid, provided that the amount of flame retardants is less than 0.01 pbw.

5. The multilayer article according to any of claims 1 to 4 having a peel strength - determined according to ISO 527-1:2019 - which is equal to or higher than 10 N/mm².

6. The multilayer article according to any of claims 1 to 5 having a complex, 3-dimensional structure.

7. The multilayer article according to any of claims 1 to 6 having the shape of a box, a housing or a cover.

8. The multilayer article according to any of claims 1 to 7 wherein the virgin non-rubber modified copolymers comprise: from 65 to 80% by weight of at least one monomer selected from styrene, α-methylstyrene and mixtures of styrene and α-methylstyrene, and from 20 to 35% by weight of a monomer selected from acrylonitrile and mixtures of acrylonitrile and methacrylonitrile.

9. Process for the preparation of a multilayer article according to claims 1 to 8 by co-injection molding comprising the steps of:
(i) providing a molten virgin plastic material for layer b);
(ii) via a first hot runner system, feeding and complete injection of the molten virgin plastic material for layer b) into the mold cavity of an injection molding machine to obtain layer b), preferably skin layer b);
(iii) providing a molten recycled plastic material for core layer a);
(iv) immediately after completion of step (ii), via a second hot runner system, feeding and complete injection of the molten recycled plastic material for core layer a) into the still molten virgin plastic material of layer b) already in the mold cavity of the injection molding machine to obtain the multilayer article, preferably two-layer article.

10. The process according to claim 9 wherein the temperature in the first hot runner system is at least 10°C, preferably 20°C, more preferably 30°C, higher than the temperature in the second hot runner system.

11. The process according to claim 9 or 10 wherein in the first hot runner system a temperature in the range of 200 to 280°C, preferably 230 to 250°C, is used for the molten virgin plastic material, and, in the second hot runner system a temperature in the range of 180 to 240°C, preferably 200 to 220°C, is used for the molten recycled plastic material.

12. Use of the multi-layer article, preferably two-layer article, according to any of claims 1 to 8 for applications in the household sector.

## Patentansprüche

1. Mehrschichtiger Artikel, umfassend:
a) eine Kernschicht a), bestehend aus einem recycelten Kunststoffmaterial, das mindestens ein recyceltes Nitril-Dien-Vinylaromaten-Pfropfcopolymer, vorzugsweise ein recyceltes Acrylnitril-Butadien-Styrol-Pfropfcopolymer, umfasst; und
b) eine Schicht b), bestehend aus einem neuen Kunststoffmaterial, das mindestens ein neues Nitril-Dien-Vinylaromaten-Pfropfcopolymer, vorzugsweise ein neues Acrylnitril-Butadien-Styrol-Pfropfcopolymer, umfasst;
wobei
• der Anteil der Kernschicht a) - bezogen auf den gesamten Mehrschichtartikel - 20 bis 50 Gew.-%, vorzugsweise 25 bis 45 Gew.-%, beträgt und
• die Kernschicht a) von der Schicht b) umschlossen wird;
• das neue Kunststoffmaterial der Schicht b) 5 bis 70 Gew.-%, vorzugsweise 10 bis 60 Gew.-%, des mindestens einen neuen Nitril-Dien-Vinylaromaten-Pfropfcopolymers, vorzugsweise des neuen Acrylnitril-Butadien-Styrol-Pfropfcopolymers, und 30 bis 95 Gew.-%, vorzugsweise 40 bis 90 Gew.-%, mindestens eines neuen, nicht kautschukmodifizierten Copolymers, ausgewählt aus Styrol/(Meth)acrylnitril-Copolymeren und alpha-Methylstyrol/(Meth)acrylnitril-Copolymeren;
• das neue Kunststoffmaterial eine diskontinuierliche Phase bildet, die dispergierte, kugelförmige neue Nitril-Dien-Vinylaromaten-Pfropfcopolymerteilchen in einer Matrix aus mindestens einem neuen, nicht kautschukmodifizierten Copolymer, ausgewählt aus Styrol/(Meth)acrylnitril-Copolymeren und alpha-Methylstyrol/(Meth)acrylnitril-Copolymeren, umfasst, vorzugsweise mindestens ein Styrol/Acrylnitril (SAN)-Copolymer und/oder ein alpha-Methylstyrol/Acrylnitril (AMSAN)-Copolymer, wobei die neuen Nitril-Dien-Vinylaromaten-Pfropfcopolymerteilchen durch Emulsionspolymerisation erhalten werden und aus einem Pfropfgrundpolymer auf Basis mindestens eines konjugierten Diens und einer Pfropfhülle aufgebaut sind, die auf das Pfropfgrundpolymer gepfropft und auf Basis mindestens eines vinylaromatischen Monomers und Acrylnitril und/oder Methacrylnitril aufgebaut ist;
• die durch Emulsionspolymerisation erhaltenen neuen Nitril-Dien-Vinylaromaten-Pfropfcopolymerteilchen eine mittlere gewichtsbezogene Teilchengröße (D50) - bestimmt durch OsO₄- oder RuO₂-gefärbte Elektronenmikroskopaufnahmen gemäß der Beschreibung - von 90 bis 400 nm aufweisen; und
• das Dien ein konjugiertes Dien, insbesondere Butadien, ist.

2. Mehrschichtiger Artikel nach Anspruch 1, bestehend aus den Schichten a) und b).

3. Mehrschichtiger Artikel nach Anspruch 1 oder 2, wobei der Anteil der Kernschicht a) - bezogen auf den gesamten mehrschichtigen Artikel - 30 bis 45 Gew.-%, vorzugsweise 35 bis 40 Gew.-%, beträgt.

4. Mehrschichtiger Artikel nach einem der Ansprüche 1 bis 3, wobei das neue Kunststoffmaterial außerdem 0,01 bis 20 Gewichtsteile, vorzugsweise 0,1 bis 10 Gewichtsteile - bezogen auf 100 Gewichtsteile neues Kunststoffmaterial - mindestens eines Additivs und/oder Verarbeitungshilfsmittels enthält, vorausgesetzt, dass die Menge an Flammschutzmitteln weniger als 0,01 Gewichtsteile beträgt.

5. Mehrschichtiger Artikel nach einem der Ansprüche 1 bis 4 mit einer Schälfestigkeit - bestimmt nach ISO 527-1:2019 -, die gleich oder höher als 10 N/mm² ist.

6. Mehrschichtiger Artikel nach einem der Ansprüche 1 bis 5 mit einer komplexen, 3-dimensionalen Struktur.

7. Mehrschichtige Artikel nach einem der Ansprüche 1 bis 6, der die Form eines Behältnisses, eines Gehäuses oder einer Abdeckung hat.

8. Mehrschichtiger Artikel nach einem der Ansprüche 1 bis 7, wobei die neuen, nicht kautschukmodifizierten Copolymere umfassen: 65 bis 80 Gew.-% mindestens eines Monomers, ausgewählt aus Styrol, α-Methylstyrol und Mischungen von Styrol und α-Methylstyrol, und 20 bis 35 Gew.-% eines Monomers, ausgewählt aus Acrylnitril und Mischungen von Acrylnitril und Methacrylnitril.

9. Verfahren zur Herstellung eines mehrschichtigen Artikels nach einem der Ansprüche 1 bis 8 durch Co-Spritzgießen, umfassend die Schritte:
(i) Bereitstellung eines geschmolzenen neuen Kunststoffmaterials für die Schicht b);
(ii) Zuführung und vollständige Einspritzung des geschmolzenen neuen Kunststoffs für die Schicht b) über ein erstes Heißkanalsystem in den Formhohlraum einer Spritzgießmaschine, um die Schicht b), vorzugsweise die Randschicht b), zu erhalten;
(iii) Bereitstellung eines geschmolzenen recycelten Kunststoffs für die Kernschicht a);
(iv) Zuführung und vollständige Einspritzung des geschmolzenen recycelten Kunststoffs für die Kernschicht a) unmittelbar nach Abschluss von Schritt (ii) über ein zweites Heißkanalsystem in den noch geschmolzenen neuen Kunststoff der Schicht b), der sich bereits im Formhohlraum der Spritzgießmaschine befindet, um den mehrschichtigen, vorzugsweise zweischichtigen Artikel zu erhalten.

10. Verfahren nach Anspruch 9, wobei die Temperatur im ersten Heißkanalsystem mindestens 10°C, vorzugsweise 20°C, stärker bevorzugt 30°C, höher ist als die Temperatur im zweiten Heißkanalsystem.

11. Verfahren nach Anspruch 9 oder 10, wobei im ersten Heißkanalsystem eine Temperatur im Bereich von 200 bis 280°C, vorzugsweise 230 bis 250°C, für das geschmolzene neue Kunststoffmaterial verwendet wird und im zweiten Heißkanalsystem eine Temperatur im Bereich von 180 bis 240°C, vorzugsweise 200 bis 220°C, für das geschmolzene recycelte Kunststoffmaterial verwendet wird.

12. Verwendung des mehrschichtigen, vorzugsweise zweischichtigen Artikels nach einem der Ansprüche 1 bis 8 für Anwendungen im Haushaltsbereich.

## Revendications

1. Article multicouche comprenant :
a) une couche centrale a) constituée d'une matière plastique recyclée comprenant au moins un copolymère greffé nitrile-diène-vinylaromatique recyclé, de préférence un copolymère greffé acrylonitrile-butadiène-styrène recyclé ; et
b) une couche b) constituée d'une matière plastique vierge comprenant au moins un copolymère greffé nitrile-diène-vinylaromatique vierge, de préférence un copolymère greffé acrylonitrile-butadiène-styrène vierge ;
dans lequel
• la portion de la couche centrale a) - rapportée à l'article multicouche entier - est de 20 à 50 % en poids, de préférence de 25 à 45 % en poids, et
• la couche centrale a) est encapsulée par la couche b) ;
• la matière plastique vierge de la couche b) comprend 5 à 70 % en poids, de préférence 10 à 60 % en poids d'au moins un copolymère greffé nitrile-diène-vinylaromatique vierge, de préférence un copolymère greffé acrylonitrile-butadiène-styrène vierge, et 30 à 95 % en poids, de préférence 40 à 90 % en poids d'au moins un copolymère vierge non modifié par caoutchouc choisi parmi les copolymères styrène/(méth)acrylonitrile et les copolymères alpha-méthylstyrène/(méth)acrylonitrile ;
• la matière plastique vierge forme une phase discontinue comprenant des particules sphériques de copolymère greffé nitrile-diène-vinylaromatique vierge, dispersées dans une matrice d'au moins un copolymère vierge non modifié par caoutchouc choisi parmi les copolymères styrène/(méth)acrylonitrile et les copolymères alpha-méthylstyrène/ (méth)acrylonitrile, de préférence au moins un copolymère styrène/acrylonitrile (SAN) et/ou un copolymère alpha-méthylstyrène/acrylonitrile (AMSAN), dans lequel les particules de copolymère greffé nitrile-diène-vinylaromatique vierge sont obtenues par polymérisation en émulsion et construites à partir d'un polymère de base greffage basé sur au moins un diène conjugué, et une enveloppe de greffage, greffée sur la base greffage et construite à base d'au moins un monomère vinylaromatique et d'acrylonitrile et/ou méthacrylonitrile ;
• les particules de copolymère greffé nitrile-diène-vinylaromatique vierge obtenues par polymérisation en émulsion ont une taille moyenne de particule en poids (D50) - déterminée par photomicrographie électronique colorée par OsO₄ or RuO₂ selon la description - de 90 à 400 nm ; et
• le diène est un diène conjugué, en particulier le butadiène.

2. Article multicouche selon la revendication 1, constitué des couches a) et b).

3. Article multicouche selon la revendication 1 ou 2, dans lequel la portion de la couche centrale a) - rapportée à l'article multicouche entier - est de 30 à 45 % en poids, de préférence de 35 à 40 % en poids.

4. Article multicouche selon l'une quelconque des revendications 1 à 3, dans lequel la matière plastique vierge comprend en outre de 0,01 à 20 parties en poids (parties en poids), de préférence de 0,1 à 10 parties en poids - sur la base de 100 parties en poids de matière plastique vierge - d'au moins un additif et/ou auxiliaire de traitement, à condition que la quantité d'agents ignifugeants soit inférieure à 0,01 partie en poids.

5. Article multicouche selon l'une quelconque des revendications 1 à 4, ayant une résistance au pelage - déterminée selon la norme ISO 527-1:2019 - qui est égale ou supérieure à 10 N/mm².

6. Article multicouche selon l'une quelconque des revendications 1 à 5, ayant une structure tridimensionnelle complexe.

7. Article multicouche selon l'une quelconque des revendications 1 à 6, ayant la forme d'une boîte, d'un boîtier ou d'un couvercle.

8. Article multicouche selon l'une quelconque des revendications 1 à 7, dans lequel les copolymères vierges non modifiés par caoutchouc comprennent : de 65 à 80 % en poids d'au moins un monomère choisi parmi le styrène, l'α-méthylstyrène et des mélanges de styrène et d'α-méthylstyrène, et de 20 à 35 % en poids d'un monomère choisi parmi l'acrylonitrile et les mélanges d'acrylonitrile et de méthacrylonitrile.

9. Procédé de préparation d'un article multicouche selon les revendications 1 à 8 par moulage par co-injection comprenant les étapes de :
(i) fourniture d'une matière plastique vierge fondue pour la couche b) ;
(ii) via un premier système de canaux chauds, alimentation et injection complète de la matière plastique vierge fondue pour la couche b) dans la cavité de moule d'une machine de moulage par injection pour obtenir la couche b), de préférence la couche de peau b) ;
(iii) fourniture d'une matière plastique recyclée fondue pour la couche centrale a) ;
(iv) immédiatement après l'achèvement de l'étape (ii), par l'intermédiaire d'un second système de canaux chauds, alimentation et injection complète de la matière plastique recyclée fondue pour la couche centrale a) dans la matière plastique vierge encore fondue de la couche b) déjà présente dans la cavité de moule de la machine de moulage par injection pour obtenir l'article multicouche, de préférence un article bicouche.

10. Procédé selon la revendication 9, dans lequel la température dans le premier système de canaux chauds est d'au moins 10 °C, de préférence 20 °C, plus préférablement 30 °C, supérieure à la température dans le second système de canaux chauds.

11. Procédé selon la revendication 9 ou 10, dans lequel, dans le premier système de canaux chauds, une température dans la plage de 200 à 280 °C, de préférence de 230 à 250 °C, est utilisée pour la matière plastique vierge fondue et, dans le second système de canaux chauds, une température dans la plage de 180 à 240 °C, de préférence 200 à 220 °C, est utilisée pour la matière plastique recyclée fondue.

12. Utilisation de l'article multicouche, de préférence de l'article bicouche, selon l'une quelconque des revendications 1 à 8 pour des applications dans le secteur domestique.
